(19) Europäisches Patentamt
European Patent Office
Office européen des brevets

(11) **EP 4 112 711 B1**

(12) **EUROPEAN PATENT SPECIFICATION**

(45) Date of publication and mention
of the grant of the patent:
**11.09.2024 Bulletin 2024/37**

(21) Application number: **21760591.4**

(22) Date of filing: **09.02.2021**

(51) International Patent Classification (IPC):
*C12G 3/04* *(2019.01)*    *C12G 3/00* *(2019.01)*
*C12G 3/06* *(2006.01)*

(52) Cooperative Patent Classification (CPC):
**C12G 3/04; C12G 3/00; C12G 3/06**

(86) International application number:
**PCT/JP2021/004732**

(87) International publication number:
**WO 2021/171998 (02.09.2021 Gazette 2021/35)**

(54) **CONTAINER-PACKED CARBONATED ALCOHOLIC BEVERAGE**

IN EINEM BEHÄLTER VERPACKTES KOHLENSÄUREHALTIGES ALKOHOLISCHES GETRÄNK

BOISSON ALCOOLISÉE GAZEUSE CONDITIONNÉE EN RÉCIPIENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.02.2020 JP 2020033947**

(43) Date of publication of application:
**04.01.2023 Bulletin 2023/01**

(73) Proprietor: **Suntory Holdings Limited
Osaka 530-8203 (JP)**

(72) Inventors:
• **KOZU, Saki
Kawasaki-shi, Kanagawa 211-0067 (JP)**
• **YOSHIHIRO, Akira
Kawasaki-shi, Kanagawa 211-0067 (JP)**

(74) Representative: **Vossius & Partner
Patentanwälte Rechtsanwälte mbB
Siebertstraße 3
81675 München (DE)**

(56) References cited:
**WO-A1-2017/169100       JP-A- 2007 039 610
JP-A- 2016 013 115        JP-A- 2018 143 212
JP-A- 2018 143 213        JP-A- H10 262 642**

• **DATABASE GNPD ANONYMOUS : "Jug Beer ",
XP055961607, retrieved from MINTEL Database
accession no. 1073425**

**Description**

TECHNICAL FIELD

The present invention relates to a packaged carbonated alcoholic beverage having a relatively high carbon dioxide gas pressure, and a method related thereto.

BACKGROUND ART

In recent years, carbonated alcoholic beverages represented by RTD beverages have become increasingly popular. The term "RTD" is an abbreviation of the phrase "ready to drink". Exemplary RTD beverages include alcoholic beverages that can be readily drunk as they are, such as canned shochu-based beverages, canned cocktails, and canned whiskey and sodas.
Carbonated alcoholic beverages have various problems, and various techniques for addressing those problems have been publicly available. For example, PTL 1 discloses a technique for reducing the bitterness derived from alcohols. PTL 2 discloses a technique for obtaining a desired pungent sensation of carbon dioxide gas. PTL 3 discloses alcoholic beverages with a salt content of 1 mg/100 mL or more and a sodium content of between 5 and 650 mg/100 mL with improved flavor. PTL 4 relates to low alcohol beverages with enhanced alcoholic taste having a sodium content of 0.03 to 1.1 g/L, a molar ratio of sodium to potassium of from 0.5 to 60 and carbonic acid, preferably with a carbon dioxide pressure of from 0.8 to 3.5 kgf/cm$^2$. PTL 5 refers to an alcoholic beverage that is refreshing, with a water sensation and that can be drunk in a large amount. The beverage contains a bitter substance and salts, preferably potassium chloride and sodium chloride at a ratio of 0.1 to 5.0.

CITATION LIST

PATENT LITERATURES

PTL 1: Japanese Unexamined Patent Application Publication No. JP 2018-143212
PTL 2: Japanese Unexamined Patent Application Publication No. JP 2018-143213
PTL 3: WO2017169100A1
PTL 4: Japanese Unexamined Patent Application Publication No. JP 2016-013115
PTL 5: Japanese Unexamined Patent Application Publication No. JP H10 262642

SUMMARY OF INVENTION

TECHNICAL PROBLEM

During the process of production of carbonated alcoholic beverages, the pressure of carbon dioxide gas may be increased in pursuit of obtaining a clean sensation derived from carbon dioxide gas. However, according to the study made by the present inventors, it was found that when the carbon dioxide gas pressure is increased in an alcoholic beverage, the pungency derived from carbon dioxide gas may be increased excessively along with the pungency derived from an alcohol. Further, it was found that a low pH range also becomes a factor for increasing a pungent sensation.
An object of the present invention is to provide a technique of reducing unfavorable pungency derived from carbon dioxide gas in a carbonated alcoholic beverage having a relatively high carbon dioxide gas pressure and a low pH.

SOLUTION TO PROBLEM

The present inventors have made intensive studies and, as a result, found that when the sodium content, acidity, and weight ratio of potassium content to sodium content are adjusted to be within the specified ranges in an alcoholic beverage having a relatively high carbon dioxide gas pressure and a low pH, unfavorable pungency derived from carbon dioxide gas in the beverage is reduced.
The present invention is directed to the following.

[1] A packaged carbonated beverage having:

a carbon dioxide gas pressure of from 1.9 to 5.0 kgf/cm$^2$;

a pH of not less than 3.5 and less than 5.0;
an alcohol content of from 1 to 16 v/v%;
a sodium content of from 60 to 600 mg/100 mL;
an acidity (in terms of citric acid) of not less than 0.41 g/100 mL; and
a weight ratio of potassium content to sodium content (K/Na) of from 0.001 to 0.1.

[2] The carbonated beverage as set forth in [1], wherein the carbonated beverage has a fruit juice content of from 0 to 9 w/w%.

[3] The carbonated beverage as set forth in [1] or [2], wherein the carbonated beverage has a potassium citrate content of less than 20 mg/100 mL.

[4] A method of reducing unfavorable pungency derived from carbon dioxide gas in a packaged carbonated beverage, wherein the packaged carbonated beverage has a carbon dioxide gas pressure of from 1.9 to 5.0 kgf/cm$^2$, a pH of not less than 3.5 and less than 5.0, and an alcohol content of from 1 to 16 v/v%,
the method comprising the steps of:

adjusting the sodium content in the beverage to be in the range of from 60 to 600 mg/100 mL;
adjusting the acidity (in terms of citric acid) of the beverage to be not less than 0.41 g/100 mL; and
adjusting the weight ratio of potassium content to sodium content (K/Na) in the beverage to be in the range of from 0.001 to 0.1.

ADVANTAGEOUS EFFECTS OF INVENTION

The present invention can reduce unfavorable pungency derived from carbon dioxide gas in an alcoholic beverage having a relatively high carbon dioxide gas pressure and a low pH.

As used herein, the term "unfavorable pungency derived from carbon dioxide gas" includes a burning sensation and an irritating pungent sensation. The term "burning sensation" refers to a strong pungent sensation caused by an alcohol and perceived in the oral cavity or the throat when drinking an alcoholic beverage. This sensation is boosted by the pungency of carbon dioxide gas. The term "irritating pungent sensation" refers to a pungent sensation derived from carbon dioxide gas and perceived when carbon dioxide gas bubbles pop while a carbonated beverage drunk passes through the oral cavity to the throat.

In one aspect, the present invention can also enhance the alcohol's fullness of body and/or drinkability of the carbonated alcoholic beverage.

Additionally, the term "alcohol's fullness of body" refers to a character of an alcoholic beverage which gives a person who drinks it a sense of satisfaction in terms of the complexity of taste characteristic of an alcoholic beverage, the depth of flavor derived from an alcohol, the length of aftertaste, or the like. The "drinkability" refers to a character of a beverage which is so easy to drink that it encourages a person to drink more of it.

DESCRIPTION OF EMBODIMENTS

Hereunder, the packaged carbonated alcoholic beverage of the present invention (hereinafter also referred to as "the beverage of the present/this invention"), and a method related thereto, will be described.

(Carbon dioxide gas)

The beverage of the present invention comprises carbon dioxide gas at high gas pressures. The pressure of carbon dioxide gas is specifically in the range of from 1.9 to 5.0 kgf/cm$^2$, preferably from 1.9 to 3.7 kgf/cm$^2$, more preferably from 2.0 to 3.0 kgf/cm$^2$, still more preferably from 2.0 to 2.7 kgf/cm$^2$.

Carbon dioxide gas can be added to the beverage using a method commonly known to skilled artisans. As non-limiting examples of such a known method, carbon dioxide may be dissolved in a beverage under pressure; carbon dioxide and a beverage may be mixed in piping using a mixer such as a carbonator produced by Tuchenhagen GmbH; a beverage may be sprayed into a tank filled with carbon dioxide to cause the beverage to absorb carbon dioxide; or a beverage may be mixed with carbonated water. The pressure of carbon dioxide gas is adjusted using any suitable means as mentioned above.

Unless otherwise specified herein, the carbon dioxide gas pressure refers to a carbon dioxide gas pressure at 20°C. The carbon dioxide gas pressure can be measured using GVA-500A, a gas volume analyzer produced by Kyoto Electronics Manufacturing Co., Ltd. For example, with the sample temperature being adjusted to 20°C, a packaged beverage placed in the aforementioned gas volume analyzer is subjected to gas venting (sniffing) and shaking, and then measured for carbon dioxide gas pressure.

(pH)

The beverage of the present invention has a pH of not less than 3.5 and less than 5.0, preferably from 3.5 to 4.5, more preferably from 3.6 to 4.2, still more preferably from 3.7 to 4.1.

As referred to herein, the pH of the beverage refers to a pH value measured in the beverage in a decarbonated state. Therefore, the pH of the beverage can be measured, for example, after completion of the gas venting and shaking steps which are performed when measuring the carbon dioxide gas pressure as mentioned above.

(Alcohol content)

The beverage of the present invention comprises an alcohol. The term "alcohol" as referred to herein refers to ethanol, unless otherwise specified.

The beverage of the present invention has an alcohol content of from 1 to 16 v/v%, preferably from 3 to 12 v/v%, more preferably from 3 to 10 v/v%.

The alcohol may be incorporated in the beverage by any given means. Since one of particularly preferred embodiments of this invention is a RTD beverage such as shochu-based beverage, the beverage of this invention preferably comprises a distilled liquor. The distilled liquor used in this invention is not limited by its source materials or by its preparation method. Examples of the distilled liquor include spirits (e.g., vodka, rum, tequila, gin, aquavit, Korn), brewer's alcohol, neutral spirits, liqueurs, whiskey, brandy, and shochu. Further, immersed liquors prepared by immersing a fruit, vegetable, tea leaves, spice, herb, or the like in such a distilled liquor as mentioned above may be used.

In the present invention, the alcohol content in the beverage can be measured by any known method -- for example, by a vibrational densimeter. To be specific, the beverage is filtered or sonicated to remove carbon dioxide gas, and the $CO_2$-free sample is distilled under direct fire. Then, the density at 15°C of the resulting distillate is measured and converted to an alcohol content according to Table 2 "Conversion among Alcohol Content, Density (15°C) and Specific Gravity (15/15°C)" which is annexed to the Official Analysis Method of the National Tax Agency in Japan (National Tax Agency Directive No. 6 in 2007, revised on June 22, 2007).

(Sodium)

The beverage of the present invention comprises sodium. The sodium content in the beverage of this invention is in the range of from 60 to 600 mg/100 mL, preferably from 65 to 500 mg/100 mL, more preferably from 70 to 400 mg/100 mL, still more preferably from 80 to 300 mg/100 mL. Other exemplary sodium contents are in the range of from 60 to 300 mg/100 mL, from 60 to 200 mg/100 mL, and from 60 to 150 mg/100 mL. When the sodium content is adjusted to be within an appropriate range, unfavorable pungency derived from carbon dioxide gas can be reduced.

In the present invention, sodium can be added to the beverage in the form of a salt that can be used in beverages and foods. Examples of the salt that can be used to add sodium to the beverage of this invention include, but are not limited to, sodium citrate (e.g., trisodium citrate), sodium carbonate, sodium malate, sodium tartrate, sodium chloride, sodium lactate, sodium acetate, sodium sulfite, sodium hyposulfite, sodium hydrogen carbonate, sodium alginate, saccharin sodium, sodium benzoate, sodium L-ascorbate, sodium sorbate, and sodium erythorbate. Further, in order to add sodium to the beverage, a source material containing sodium or a sodium salt, such as fruit juice, vegetable juice, natural water or deep ocean water, may be added to the beverage.

When sodium contained in the beverage of the present invention is in the form of a salt, the sodium content in the beverage can be calculated in terms of the content of its free form. Further, in the context of this invention, the sodium content or concentration in the beverage (sample solution) can be measured by a known procedure using an ICP optical emission spectrometer.

(Potassium)

The beverage of the present invention may further comprise potassium. The weight ratio of potassium content to sodium content (K/Na) in the beverage of this invention is in the range of preferably from 0.001 to 0.1, more preferably from 0.0057 to 0.1, yet more preferably from 0.001 to 0.05. When the K/Na weight ratio is adjusted to be within an appropriate range, unfavorable pungency derived from carbon dioxide gas can be reduced.

In the present invention, potassium can be added to the beverage in the form of a salt that can be used in beverages and foods. Examples of the salt that can be used to add potassium to the beverage of this invention include, but are not limited to, potassium tartrate, potassium chloride, potassium carbonate, potassium sorbate, potassium pyrosulfite, acesulfame potassium, potassium alginate, potassium citrate (e.g., tripotassium citrate), potassium gluconate, potassium L-glutamate, and potassium ascorbate. Further, in order to add potassium to the beverage, a source material containing potassium or a potassium salt, such as fruit juice, vegetable juice, tea, natural water or deep ocean water, may be added to the beverage.

When potassium used in the present invention is in the form of a salt, the potassium content in the beverage can be calculated in terms of the content of its free form. Further, in the context of this invention, the potassium content or concentration in the beverage (sample solution) can be measured by a known procedure using an ICP optical emission spectrometer.

(Acidity)

The beverage of the present invention has an acidity of not less than 0.41 g/100 mL, preferably from 0.41 to 2.2 g/100 mL, more preferably from 0.43 to 1.5 g/100 mL, still more preferably from 0.45 to 1.5 g/100 mL, yet more preferably from 0.45 to 1.2 g/100 mL. When the acidity is adjusted to be within an appropriate range, unfavorable pungency derived from carbon dioxide gas can be reduced.

The "acidity" as used herein is a value serving as an index for acid content, and can be determined by calculation based on the amount of an alkali, such as sodium hydroxide, required for neutralizing a certain amount of a beverage (sample) with the alkali (to pH 7.0). Acidity measurement can be conducted using an automatic titrator (e.g., Mettler Toledo DL50). In this invention, the acidity is expressed using a value calculated in terms of citric acid content (i.e., calculated from said alkali amount required for neutralization based on the assumption that the acid contained in a beverage is exclusively citric acid).

(Fruit juice)

The beverage of the present invention may further comprise a fruit juice. The fruit juice can be of any forms, including a straight fruit juice used as freshly squeezed from a fruit, or a concentrated fruit juice obtained by concentrating a straight fruit juice. Also, a clear fruit juice or a cloudy fruit juice may be used. Further, use may be made of a fruit juice from whole fruit, prepared by crushing the whole fruit including husk and simply removing particularly coarse solid matters like seeds, a fruit purée prepared by sieving a fruit, or a fruit juice obtained by crushing or extracting a dried fruit pulp.

The type of a fruit juice is not particularly limited. Examples of fruit juices include, but are not limited to, citrus fruit juices (*e.g.*, juices from orange, *Citrus unshiu,* grapefruit, lemon, lime, *Citrus junos, Citrus iyo, Citrus natsudaidai, Citrus hassaku, Citrus reticulata* var. *poonensis, Citrus depressa, Citrus sphaerocarpa,* and the like), apple juice, grape juice, peach juice, tropical fruit juices (*e.g.*, pineapple juice, guava juice, banana juice, mango juice, acerola juice, litchi juice, papaya juice, passion fruit juice), and other fruit juices (*e.g.*, Japanese apricot juice, Japanese pear juice, apricot juice, plum juice, berry juice, kiwi fruit juice), strawberry juice, and melon juice. Any one of the aforementioned fruit juices may be used alone, or two or more of them may be used in combination.

The content of a fruit juice in the beverage of the present invention is not particularly limited, but is typically in the range of from 0 to 100 w/w%, or less than 10 w/w, or in the range of from 0 to 9 w/w%, in terms of percent fruit juice content.

In the present invention, the "percent fruit juice content" in a beverage shall be calculated according to the conversion expression mentioned below using the amount (g) of a fruit juice added to 100 g of a sample. Further, calculation of concentration factor shall be made as per the JAS guidelines, with the proviso that the sugar refractometer index for a sugar, honey, or the like added to a fruit juice is excluded.

$$\text{Percent fruit juice content (w/w\%)} =$$

$$\text{<fruit juice amount added (g)>} \times \text{<concentration factor>} / 100 \text{ mL} /$$

$$\text{<beverage's specific gravity>} \times 100$$

(Type of beverage)

The type of the beverage of the present invention is not particularly limited. Preferably, the beverage of this invention is a whiskey and soda, a shochu-based beverage, a cocktail, a sour, or the like. As used in connection with the beverage of this invention, the terms "whiskey and soda" and "shochu-based beverage" refer to different beverages comprising water, a distilled liquor, and carbon dioxide gas. The whiskey and soda, and shochu-based beverage may further comprise a fruit juice. As used in connection with the beverage of this invention, the term "sour" refers to a beverage comprising a spirit, an acidic fruit juice such as citrus fruit juice, a sweetness component, and carbon dioxide gas. As used in connection with the beverage of this invention, the term "cocktail" refers to an alcohol beverage prepared by mixing a fruit juice and the like with a base liquor.

(Sweetener)

The beverage of the present invention may further comprise a specified amount of a sweetener. In this invention, a natural sweetener, a sugar alcohol, an artificial sweetener, or the like can be used as a sweetener. Examples of natural sweeteners include, but are not limited to, glucose, fructose, mogrol glycoside, glycyrrhetinic acid glycoside, maltose, sucrose, lactose, rare sugar, high-fructose syrup, fructose-glucose syrup, oligosaccharide, honey, sugarcane squeeze (brown sugar syrup), sugar (*e.g.*, saccharose, yellow soft sugar, brown sugar, Wasanbon), maple syrup, molasses, and starch syrup. Examples of sugar alcohols include, but are not limited to, erythritol, xylitol, sorbitol, maltitol, and mannitol. Examples of artificial sweeteners include, but are not limited to, sucralose, acesulfame potassium, aspartame, saccharin, alitame, and neotame.

The sweetener used in the present invention preferably comprises one or two or more selected from the group consisting of acesulfame potassium, sucralose, fructose-glucose syrup, sugar, starch syrup, and oligosaccharide. Further, the sweetener used in this invention preferably comprises one or two or more selected from the group consisting of acesulfame potassium, sucralose, fructose-glucose syrup, and sugar.

As referred to herein, the "degree of sweetness" refers to the degree of sweetness derived from a sweetener added to a carbonated beverage, and does not include the degree of sweetness derived from a sweetness component inherently present in a citrus fruit juice such as lemon juice. Also, the "degree of sweetness", as referred to herein, is a degree of sweetness calculated with reference to the sweetness of sucrose, and is equivalent to a sucrose concentration (w/v%) in an aqueous sucrose solution. For example, the degree of sweetness of 2 is equivalent to the sweetness of an aqueous solution of 2 w/v% sucrose. The degrees of sweetness of some exemplary sweeteners as referred to herein are as follows: the degrees of sweetness of acesulfame potassium, sucralose, and fructose-glucose syrup are regarded as 20000, 60000, and 75.5, respectively, with reference to that of sucrose, which is taken as 100. Adjustment of the degree of sweetness can be made by adjusting the amount of a natural sweetener and/or artificial sweetener to be added.

The degree of sweetness derived from a sweetener contained in the beverage of the present invention is in the range of from 0.5 to 7.0, preferably from 0.6 to 6.0, more preferably from 0.7 to 4.0, still more preferably from 1.0 to 3.0, in terms of sucrose (w/v%).

(Other components)

The beverage of the present invention may also have added thereto other components, including various additives commonly used in beverages, such as flavoring, vitamin, pigment, antioxidant, preservative, seasoning, extract, pH adjustor, and quality stabilizer, as long as such other components do not impair the effects of this invention.

In one embodiment, the beverage of the present invention has a potassium citrate content of less than 20 mg/100 mL.

In one embodiment, the beverage of this invention has a magnesium content of less than 10 mg/L.

In one embodiment, the beverage of this invention has an ascorbic salt content of less than 3 g/L.

In one embodiment, the beverage of this invention does not comprise 1-octen-3-ol.

(Packaged beverage)

The beverage of the present invention is provided in a form packed in a package. Examples of the package form include, but are not limited to, metal package such as can, PET bottle, paper package, glass bottle, and pouch. A sterilized, packaged beverage product can be produced through, for example, taking the step of performing heat sterilization such as retort sterilization after the beverage of this invention is packed in a package, or the step of packing the beverage into a package after the beverage is sterilized.

(Related method)

In another aspect, the present invention is directed to a method of reducing unfavorable pungency derived from carbon dioxide gas in a packaged carbonated beverage, wherein the packaged carbonated beverage has a carbon dioxide gas pressure of from 1.9 to 5.0 $kgf/cm^2$, a pH of not less than 3.5 and less than 5.0, and an alcohol content of from 1 to 16 v/v%. Said method comprises the steps of:

adjusting the sodium content in the beverage to be in the range of from 60 to 600 mg/100 mL;
adjusting the acidity (in terms of citric acid) of the beverage to be not less than 0.41 g/100 mL; and
adjusting the weight ratio of potassium content to sodium content (K/Na) in the beverage to be in the range of from 0.001 to 0.1.

Said method may further comprise a step of mixing source materials so as to ensure that the beverage has a carbon dioxide gas pressure of from 1.9 to 5.0 kgf/cm$^2$, a pH of not less than 3.5 and less than 5.0, and an alcohol content of from 1 to 16 v/v%.

The types and contents of components contained in the beverage, weight ratio of components, carbon dioxide gas pressure, pH, acidity, and their preferred ranges, and adjustment procedures thereof are as described above in connection with the beverage of the present invention, or are obvious from the descriptions given above regarding the inventive beverage. The timings of performing the different steps are not limited. For example, the aforementioned steps may be performed simultaneously or separately, or may be performed in any given order. The steps can be performed in any way as long as the beverage finally obtained satisfies the aforementioned requirements.

(Numerical ranges)

For the purpose of clarification, all numerical ranges defined herein include their endpoints, *i.e.*, their lower and upper limit values.

EXAMPLES

Hereunder, the present invention will be described by way of working examples, but this invention is not limited to these examples.

(Experiment 1) Investigation of unfavorable pungency derived from carbon dioxide gas

Different beverage samples were prepared according to the recipes indicated in the table given below (it should be noted that the balance was water). As a source of alcohol, a brewer's alcohol (alcohol content: 95 v/v%) was used. As a flavoring, a citrus flavoring was used. As a fruit juice, a citrus fruit juice was used. The acidity was adjusted with citric acid. For the purpose of pH adjustment, a pH adjustor was used in small quantities.

The obtained samples were subjected to sensory evaluation. To be specific, four professional panelists evaluated the beverage samples from the following four perspectives: low burning sensation; low irritating pungent sensation; alcohol's fullness of body; and drinkability. All samples were rated on a five-point scale (a most superior rating was a score of 5 while a most inferior rating was a score of 1). The ratings given from each of the above perspectives were averaged to calculate an average rating. Further, an average rating of not less than 4 was assessed as "◎"; an average rating of not less than 3 but less than 4 was assessed as "O"; an average rating of not less than 2 but less than 3 was assessed as "△"; and an average rating of not less than 1 but less than 2 was assessed as "×". Such assessment results are also included in the table given below.

Additionally, before the sensory evaluation, the panelists had shared a common understanding of different rating scores using reference samples corresponding to the respective rating scales.

[Table 1]

| Sample | Unit | Com.Ex.1 | Com.Ex.2 | Com.Ex.3 | Com.Ex.4 | |
|---|---|---|---|---|---|---|
| CO$_2$ gas pressure | kgf/cm$^2$ | 1.9 | 1 | 1.9 | 1.9 | |
| pH | | 3.5 | 3.5 | 5.5 | 3.5 | |
| Alcohol | v/v% | 1 | 1 | 1 | 0 | |
| Na | mg/100ml | 0 | 0 | 0 | 0 | |
| K | mg/100ml | 0 | 0 | 0 | 0 | |
| Acidity | g/100ml | 0.41 | 0.41 | 0.41 | 0.41 | |
| Flavoring | v/v% | 0.12 | 0.12 | 0.12 | 0.12 | |
| Fruit juice | w/w% | 0 | 0 | 0 | 0 | |
| K/Na weight ratio | | 0 | 0 | 0 | 0 | |
| Low burning sensation | | △ 1.3 | ○ 3.2 | △ 1.9 | ◎ 5 | |
| Low irritating pugent sensation | | △ 1.8 | ◎ 4.8 | ◎ 4.6 | ◎ 4.8 | |

(continued)

| Sample | Unit | Com.Ex.1 | Com.Ex.2 | Com.Ex.3 | Com.Ex.4 | |
|---|---|---|---|---|---|---|
| Alcohol's fullness of body | | ○ 3.3 | ○ 3 | ○ 3 | × 1 | |
| Drinkability | | Δ 2.4 | × 1.5 | × 1 | ○ 3.6 | |
| Overall rating | | Δ 2.1 | × 1.9 | × 1 | × 1.4 | |

As the carbon dioxide gas pressure was increased, a burning sensation and an irritating pungent sensation became stronger. These tendencies became much prominent in the presence of an alcohol. Further, a pungent sensation became much stronger at lower pH values. Therefore, it was found that when an alcohol was contained in carbonated beverages with a relatively high carbon dioxide gas pressure and a low pH, unfavorable pungency derived from carbon dioxide gas became stronger.

(Experiment 2) Reduction of unfavorable pungency derived from carbon dioxide gas

Different beverage samples were prepared by adding sodium and potassium to alcohol-containing beverages having a relatively high carbon dioxide gas pressure and a low pH, and then by adjusting acidity. The recipes are as shown in the tables given below. Preparation of beverage samples was performed by following the same procedure as in Experiment 1, except that common salt or trisodium citrate was used as a source of sodium, and potassium chloride or acesulfame potassium was used as a source of potassium. The sensory evaluation was also performed by following the same procedure as in Experiment 1. The sensory evaluation results are also included in the tables given below.

[Table 2]

| Sample | Unit | Ex.1 | Ex.2 | Ex.3 | Ex.4 | Ex.5 | Ex.6 | Ex.7 | Ex.8 | Com.Ex.5 | Com.Ex.6 |
|---|---|---|---|---|---|---|---|---|---|---|---|
| $CO_2$ gas pressure | kgf/cm² | 1.9 | 2 | 2.2 | 2.4 | 3 | 5 | 3.7 | 2.7 | 1.9 | 1.9 |
| pH | | 3.5 | 3.6 | 3.8 | 4 | 4.1 | 3.7 | 4.2 | 4.5 | 3.5 | 3.5 |
| Alcohol | v/v% | 1 | 7 | 7 | 9 | 5 | 3 | 16 | 5 | 1 | 1 |
| Na | mg/100ml | 60 | 70 | 70 | 80 | 300 | 400 | 500 | 600 | 50 | 650 |
| K | mg/100ml | 0.1 | 0.4 | 0.5 | 4 | 10 | 0.6 | 10 | 5 | 0.1 | 0.1 |
| Acidity | g/100ml | 0.41 | 0.45 | 0.5 | 1 | 1.2 | 0.7 | 1.5 | 2.2 | 0.41 | 0.41 |
| Flavoring | v/v% | 0.12 | 0.2 | 0.14 | 0.21 | 0 | 0.05 | 0.42 | 0.18 | 0.12 | 0.12 |
| Fruit juice | w/w% | 0 | 0 | 0 | 0 | 9 | 2 | 0 | 5 | 0 | 0 |
| K/Na weight ratio | | 0.0017 | 0.0057 | 0.0071 | 0.0500 | 0.0333 | 0.0015 | 0.0200 | 0.0083 | 0.0020 | 0.0002 |
| Low burning sensation | | ◎ 5 | ○ 3.5 | ◎ 4.2 | ○ 3.1 | ◎ 4.6 | ◎ 4.8 | ○ 3.2 | ◎ 4.4 | △ 2.8 | ○ 3.8 |
| Low irritating pugent sensation | | ○ 3.6 | ○ 3.8 | ◎ 4.8 | ◎ 4.2 | ◎ 4.8 | ○ 3.6 | ◎ 4 | ◎ 4.8 | ○ 3.6 | △ 2.9 |
| Alcohol's fullness of body | | ○ 3.3 | ◎ 4.4 | ◎ 4.3 | ◎ 4.8 | ◎ 4.1 | ○ 3.4 | ◎ 5 | ◎ 4.4 | ○ 3.3 | ○ 3.3 |
| Drinkability | | ○ 3.7 | ○ 3.8 | ◎ 5 | ◎ 4.8 | ◎ 4.5 | ○ 3.7 | ○ 3.1 | ○ 3.2 | △ 2.9 | × 1.6 |
| Overall rating | | ○ 3.3 | ○ 3.7 | ◎ 4.2 | ◎ 4.9 | ◎ 4.8 | ○ 3.7 | ○ 3.5 | ○ 3.2 | △ 2.8 | × 1.2 |

[Table 3]

| Sample | Unit | Com.Ex.7 | Com.Ex.8 | Com.Ex.9 | Com.Ex.10 | Com.Ex.11 | Com.Ex.12 | Com.Ex.13 | Com.Ex.14 | Com.Ex.15 | Com.Ex.16 |
|---|---|---|---|---|---|---|---|---|---|---|---|
| $CO_2$ gas pressure | kgf/cm² | 1.9 | 1.9 | 1.9 | 0 | 2.2 | 2 | 2 | 5.1 | 1.9 | 1.9 |
| pH | | 3.5 | 3.5 | 3.5 | 3.4 | 3.4 | 3.5 | 3.5 | 3.2 | 3.2 | 3.2 |
| Alcohol | v/v% | 1 | 1 | 1 | 6 | 20 | 4 | 0 | 7 | 5 | 5 |
| Na | mg/100ml | 60 | 60 | 60 | 80 | 60 | 10 | 70 | 110 | 50 | 650 |
| K | mg/100ml | 0.1 | 0 | 7 | 1 | 0.4 | 2.5 | 0.1 | 0 | 0 | 0 |
| Acidity | g/100ml | 0.38 | 0.41 | 0.41 | 0.6 | 1.7 | 0.6 | 0.3 | 0.1 | 0.5 | 0.5 |
| Flavoring | v/v% | 0.12 | 0.12 | 0.12 | 0 | 0.42 | 0 | 0.12 | 0 | 0 | 0.08 |
| Fruit juice | w/w% | 0 | 0 | 0 | 6 | 0 | 10 | 3 | 1 | 5 | 5 |
| K/Na weight ratio | | 0.0017 | 0 | 0.1167 | 0.0125 | 0.0067 | 0.2500 | 0.0014 | 0 | 0 | 0 |
| Low burning sensation | | ◎ 4.8 | ◎ 4.1 | ◎ 4.3 | ○ 3.8 | × 1.8 | × 1.7 | ○ 3.3 | ○ 3.1 | Δ 2 | ○ 3.5 |
| Low irritating pugent sensation | | ◎ 4.5 | Δ 2.9 | ◎ 4.8 | - - | Δ 2.8 | Δ 2.6 | ◎ 4.2 | Δ 1.4 | ○ 3.6 | Δ 2.8 |
| Alcohol's fullness of body | | Δ 2.4 | ○ 3.2 | × 1.6 | ◎ 4.5 | ◎ 4.6 | ◎ 4.2 | × 1 | Δ 1.6 | ◎ 4.4 | ◎ 4.1 |
| Drinkability | | Δ 2.6 | Δ 2.8 | × 1.2 | × 1.8 | × 1.2 | × 1.4 | Δ 2.3 | × 1.2 | Δ 2.8 | × 1.2 |
| Overall rating | | Δ 2.4 | Δ 2.8 | × 1.5 | × 1.5 | × 1 | × 1.9 | Δ 2.1 | Δ 2.9 | Δ 2.9 | × 1.2 |

[Table 4]

| Sample | Unit | Ex.9 | Ex.10 | Com.Ex.17 | Ex.11 |
|---|---|---|---|---|---|
| $CO_2$ gas pressure | kgf/cm$^2$ | 2.4 | 2.4 | 2.4 | 1.9 |
| pH | | 4 | 4 | 4 | 3.5 |
| Alcohol | v/v% | 9 | 9 | 9 | 1 |
| Na | mg/100ml | 300 | 600 | 650 | 60 |
| K | mg/100ml | 4 | 4 | 4 | 6 |
| Acidity | g/100ml | 1 | 1 | 1 | 0.41 |
| Flavoring | v/v% | 0.21 | 0.21 | 0.21 | 0.12 |
| Fruit juice | w/w% | 0 | 0 | 0 | 0 |
| K/Na weight ratio | | 0.0133 | 0.0067 | 0.0062 | 0.1000 |
| Low burning sensation | | ◎ 4.6 | ◎ 4.4 | ○ 3.5 | ◎ 4.2 |
| Low irritating pugent sensation | | ◎ 4.8 | ◎ 4.8 | Δ 2.9 | ◎ 4.9 |
| Alcohol's fullness of body | | ◎ 4.1 | ◎ 4.2 | ◎ 4 | ○ 3.7 |
| Drinkability | | ○ 3.8 | ○ 3.1 | Δ 2.7 | ○ 3.2 |
| Overall rating | | ◎ 4.5 | ○ 3.2 | Δ 2.5 | ◎ 4.3 |

Even in beverage samples containing an alcohol and having a relatively high carbon dioxide gas pressure and a low pH, unfavorable pungency derived from carbon dioxide gas was reduced successfully by adjusting the sodium content, acidity, and K/Na ratio of the beverage samples to be within the specified ranges. The thus-prepared beverage samples were also found to be satisfactory in terms of alcohol's fullness of body and drinkability.

**Claims**

1. A packaged carbonated beverage having:

    a carbon dioxide gas pressure of from 1.9 to 5.0 kgf/cm$^2$;
    a pH of not less than 3.5 and less than 5.0;
    an alcohol content of from 1 to 16 v/v%;
    a sodium content of from 60 to 600 mg/100 mL;
    an acidity, in terms of citric acid, of not less than 0.41 g/100 mL; and
    a weight ratio of potassium content to sodium content (K/Na) of from 0.001 to 0.1.

2. The carbonated beverage according to claim 1, wherein the carbonated beverage has a fruit juice content of from 0 to 9 w/w%.

3. The carbonated beverage according to claim 1 or 2, wherein the carbonated beverage has a potassium citrate content of less than 20 mg/100 mL.

4. A method of reducing unfavorable pungency derived from carbon dioxide gas in a packaged carbonated beverage, wherein the packaged carbonated beverage has a carbon dioxide gas pressure of from 1.9 to 5.0 kgf/cm$^2$, a pH of not less than 3.5 and less than 5.0, and an alcohol content of from 1 to 16 v/v%, the method comprising the steps of:

adjusting the sodium content in the beverage to be in the range of from 60 to 600 mg/100 mL;
adjusting the acidity (in terms of citric acid) of the beverage to be not less than 0.41 g/100 mL; and
adjusting the weight ratio of potassium content to sodium content (K/Na) in the beverage to be in the range of from 0.001 to 0.1.

**Patentansprüche**

1. Ein verpacktes kohlensäurehaltiges Getränk mit:

   einem Kohlendioxid-Gasdruck von 1,9 bis 5,0 kgf/cm$^2$;
   einem pH-Wert von nicht weniger als 3,5 und weniger als 5,0;
   einem Alkoholgehalt von 1 bis 16 Vol./Vol.-%;
   einem Natriumgehalt von 60 bis 600 mg/100 ml;
   einem Säuregehalt, ausgedrückt als Citronensäure, von nicht weniger als 0,41 g/100 ml; und
   einem Gewichtsverhältnis von Kaliumgehalt zu Natriumgehalt (K/Na) von 0,001 bis 0,1.

2. Das kohlensäurehaltige Getränk nach Anspruch 1, wobei das kohlensäurehaltige Getränk einen Fruchtsaftgehalt von 0 bis 9 Gew./Gew.-% aufweist.

3. Das kohlensäurehaltige Getränk nach Anspruch 1 oder 2, wobei das kohlensäurehaltige Getränk einen Kaliumcitratgehalt von weniger als 20 mg/100 ml aufweist.

4. Ein Verfahren zur Verringerung einer nachteiligen Schärfe, die von Kohlendioxidgas in einem verpackten kohlensäurehaltigen Getränk herrührt, wobei das verpackte kohlensäurehaltige Getränk einen Kohlendioxid-Gasdruck von 1,9 bis 5,0 kgf/cm$^2$, einen pH von nicht weniger als 3,5 und weniger als 5,0 und einen Alkoholgehalt von 1 bis 16 Vol./Vol.-% aufweist,
   wobei das Verfahren die Schritte umfasst:

   Einstellen des Natriumgehalts in dem Getränk auf einen Wert im Bereich von 60 bis 600 mg/100 ml;
   Einstellen des Säuregehalts (ausgedrückt als Citronensäure) des Getränks auf nicht weniger als 0,41 g/100 ml; und
   Einstellen des Gewichtsverhältnisses von Kaliumgehalt zu Natriumgehalt (K/Na) in dem Getränk auf einen Wert im Bereich von 0,001 bis 0,1.

**Revendications**

1. Boisson gazeuse conditionnée ayant :

   une pression de dioxyde de carbone gazeux de 1,9 à 5,0 kgf/cm$^2$ ;
   un pH non inférieur à 3,5 et inférieur à 5,0 ;
   une teneur en alcool de 1 à 16 % v/v ;
   une teneur en sodium de 60 à 600 mg/100 ml ;
   une acidité, en termes d'acide citrique, non inférieure à 0,41 g/100 ml ; et
   un rapport en poids de la teneur en potassium à la teneur en sodium (K/Na) de 0,001 à 0,1.

2. Boisson gazeuse selon la revendication 1, dans laquelle la boisson gazeuse a une teneur en jus de fruits de 0 à 9 % p/p.

3. Boisson gazeuse selon la revendication 1 ou 2, dans laquelle la boisson gazeuse a une teneur en citrate de potassium inférieure à 20 mg/100 ml.

4. Méthode de réduction de l'âcreté défavorable dérivée du dioxyde de carbone gazeux dans une boisson gazeuse conditionnée, dans laquelle la boisson gazeuse conditionnée a une pression de dioxyde de carbone gazeux de 1,9 à 5,0 kgf/cm$^2$, un pH non inférieur à 3,5 et inférieur à 5,0, et une teneur en alcool de 1 à 16 % v/v,
   la méthode comprenant les étapes de :

ajustement de la teneur en sodium dans la boisson pour qu'elle soit située dans la plage allant de 60 à 600 mg/100 ml ;

ajustement de l'acidité (en termes d'acide citrique) de la boisson pour qu'elle ne soit pas inférieure à 0,41 g/100 ml ; et

ajustement du rapport en poids de la teneur en potassium à la teneur en sodium (K/Na) dans la boisson pour qu'il soit situé dans la plage allant de 0,001 à 0,1.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018143212 A
- JP 2018143213 A
- WO 2017169100 A1
- JP 2016013115 A
- JP H10262642 B